# EUROPÄISCHE PATENTSCHRIFT

(11) **EP 2 196 698 B1**
(45) Veröffentlichungstag und Bekanntmachung des Hinweises auf die Patenterteilung: **30.04.2014**
(21) Anmeldenummer: 09178446.2
(22) Anmeldetag: 09.12.2009
(51) Int. Cl.: F16H 3/12, F16D 55/00, F16D 65/14

(54) **Getriebeschaltelement**
Gearbox switching element
Elément de commutation d'engrenage

(30) Priorität: 15.12.2008 DE 102008054668
(43) Veröffentlichungstag der Anmeldung: 16.06.2010
(73) Patentinhaber: ZF Friedrichshafen AG, 88038 Friedrichshafen (DE)
(72) Erfinder: Keller, Reiner, 78351, Ludwigshafen (DE); Heinrich, Kai, 88289, Waldburg (DE); Albrecht, Stefan, 88299, Leutkirch (DE); Pantke, Michael, 88046, Friedrichshafen (DE); Schuh, Henrik, 88045, Friedrichshafen (DE)

(56) Entgegenhaltungen:
- DE-A1- 3 504 193
- DE-A1- 10 258 505
- DE-A1-102005 047 952
- JP-A- 2007 064 359
- US-A- 4 572 343
- US-A- 5 980 415

## Beschreibung

Die Erfindung betrifft ein elektromagnetisch betätigbares Getriebeschaltelement, insbesondere für eine elektromagnetisch betätigbare Getriebebremse.

Aus der DE 102 58 505 A1 ist eine elektromagnetisch betätigbare Getriebebremse eines Kraftfahrzeugs bekannt. Die dort offenbarte Getriebebremse verfügt über ein Lamellenpaket, wobei erste Lamellen des Lamellenpakets einer abzubremsenden Getriebewelle und zweite Lamellen des Lamellenpakets einem feststehenden Gehäuse zugeordnet sind. Neben dem Lamellenpaket verfügt die aus diesem Stand der Technik bekannte Getriebebremse weiterhin über einen elektromagnetischen Aktuator, um das Lamellenpaket mehr oder weniger stark zu verpressen und so ein definiertes Abbremsen der Getriebewelle zu realisieren. Der elektromagnetische Aktuator der Getriebebremse umfasst eine Ringspule und einen Ringanker, wobei durch Bestromen der Ringspule ein magnetisches Feld aufgebaut wird, das auf den Ringanker einwirkt. Ferner verfügt die aus diesem Stand der Technik bekannte Getriebebremse über einen Drehzahlsensor, der mit einem Geberrad zusammenwirkt, wobei mit Hilfe des Drehzahlsensors sowie Geberrads die Drehzahl der abzubremsenden Getriebewelle erfasst werden kann, um so das Abbremsen derselben zu steuern bzw. zu regeln. Nach der DE 102 58 505 A1 kann das Geberrad der abzubremsenden Getriebewelle zugeordnet sein. Beim Drehzahlsensor handelt es sich um eine separate, eigenständige Baugruppe.

Hiervon ausgehend liegt der vorliegenden Erfindung das Problem zu Grunde, ein neuartiges elektromagnetisch betätigbares Getriebeschaltelement zu schaffen.

Dieses Problem wird durch ein elektromagnetisch betätigbares Getriebeschaltelement gemäß Anspruch 1 gelöst. Erfindungsgemäß ist der Drehzahlsensor in den elektromagnetischen Aktuator integriert. Dabei ist vorgesehen, dass ein mit dem Drehzahlsensor zusammenwirkendes Geberrad von Lamellen des Lamellenpakets, die einer abzubremsenden Welle zugeordnet sind, gebildet ist.

Gemäß der hier vorliegenden Erfindung ist der Drehzahlsensor in den elektromagnetischen Aktuator der elektromagnetisch betätigbaren Getriebebremse integriert. Vorzugsweise ist der Drehzahlsensor in einen Magnetkörper, der auch die oder jede Spule des elektromagnetischen Aktuators aufnimmt, integriert. Hierdurch ist es dann möglich elektrische Anschlüsse für die oder jede Spule sowie den Drehzahlsensor zusammenzufassen. Hierdurch ergibt sich ein einfacherer, kompakterer Aufbau und das Getriebeschaltelement ist mit geringerem Montageaufwand herstellbar.

Bevorzugte Weiterbildungen der Erfindung ergeben sich aus den Unteransprüchen und der nachfolgenden Beschreibung. Ein Ausführungsbeispiel der Erfindung wird, ohne hierauf beschränkt zu sein, an Hand der Zeichnung näher erläutert. Dabei zeigt:

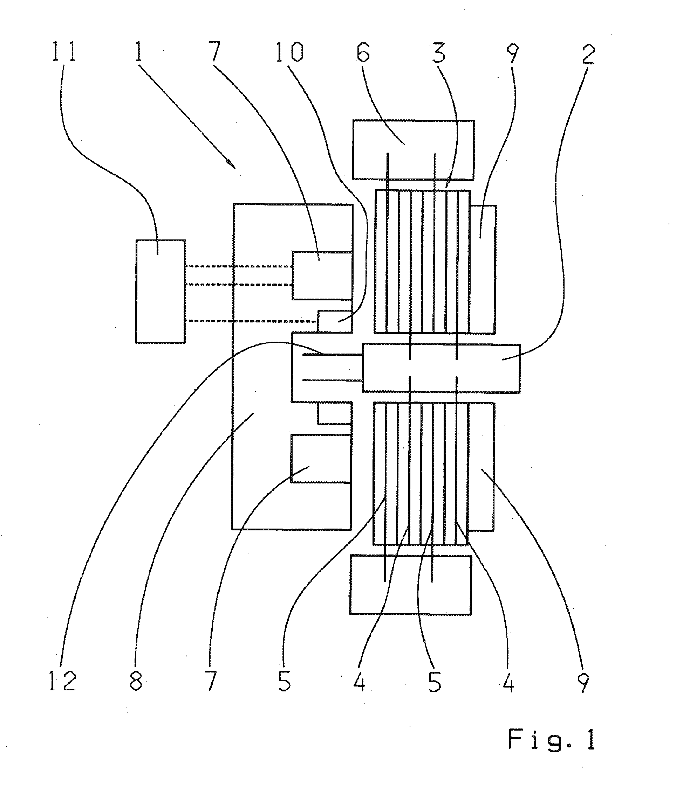

- Fig. 1: eine stark schematisierte Darstellung eines erfindungsgemäßen, elektromagnetisch betätigbaren Getriebeschaltelements.

Fig. 1 zeigt eine schematisierte Darstellung eines bevorzugten Ausführungsbeispiels eines als Getriebebremse 1 ausgebildeten, elektromagnetisch betätigbaren Getriebeschaltelements. Die in Fig. 1 gezeigte Getriebebremse 1 dient dem definierten Abbremsen einer Welle 2 eines Kraftfahrzeuggetriebes, wobei es sich bei der Welle 2 insbesondere um eine sogenannte Vorgelegewelle des Kraftfahrzeuggetriebes handelt.

Die elektromagnetisch betätigbare Getriebebremse 1 verfügt über ein Lamellenpaket 3, wobei das Lamellenpaket 3 mehrere Lamellen umfasst, nämlich erste Lamellen 4, die der abzubremsenden Getriebewelle 2 zugeordnet sind, und zweite Lamellen 5, die einem statorseitigen Gehäuse 6 der Getriebebremse 1 zugeordnet sind.

Die Lamellen 4, 5 des Lamellenpakets 3 können mithilfe eines elektromagnetischen Aktuators einstellbar mehr oder weniger stark miteinander verpresst werden, um so die Getriebebremse 2 mehr oder weniger stark abzubremsen.

Der elektromagnetische Aktuator der Getriebebremse 2 umfasst mindestens eine Spule 7, die in einem Magnetkörper 8 integriert ist, sowie einen Anker 9, wobei durch Bestromen der Spule 7 ein elektromagnetisches Feld aufgebaut wird, welches auf den Anker 9 einwirkt, wobei abhängig von der Größe des magnetischen Felds das Lamellenpaket 3 der Getriebebremse 1 mehr oder weniger stark zusammenpresst wird.

Um den Betrieb der Getriebebremse 1 zu steuern bzw. zu regeln, umfasst dieselbe einen Drehzahlsensor 10, mithilfe dessen die Drehzahl der abzubremsenden Getriebewelle 2 messtechnisch erfasst werden kann.

Im Sinne der hier vorliegenden Erfindung ist der Drehzahlsensor 10, der dem messtechnischen Erfassen der Drehzahl der abzubremsenden Getriebewelle 2 dient, in den elektromagnetischen Aktuator integriert, nämlich gemäß dem in Fig. 1 gezeigten, bevorzugten Ausführungsbeispiel in den Magnetkörper 8 des Aktuators, der auch die Spule 7 aufnimmt. Elektrische Anschlüsse der Spule 7 sowie des Drehzahlsensors 10, über welchen dieselben an eine Regeleinrichtung 11 angeschlossen werden können, können so zu einer Einheit zusammengefasst werden. In Fig. 1 sind Signalleitungen, über welche die Spule 7 sowie der Drehzahlsensor 10 mit der Regeleinrichtung 11 verbunden sind, punktiert dargestellt.

Mit dem Drehzahlsensor 10 wirkt ein Geberrad 12 zusammen, welches im Ausführungsbeispiel der Fig. 1 der abzubremsenden Getriebewelle 2 zugeordnet ist.

Dabei bewegt sich das Geberrad 12 im Ausführungsbeispiel der Fig. 1 an einer Fläche des Drehzahlsensors 10 vorbei, die sich parallel zu Rotationsachse der abzubremsenden Welle 2 erstreckt. In Fig. 1 erfolgt demnach eine radiale Erfassung der Drehzahl der abzubremsenden Getriebewelle 2 mithilfe des Drehzahlsensors 10.

Im Unterschied zum gezeigten Ausführungsbeispiel ist es auch möglich, dass das Geberrad 12 an einer Fläche des Drehzahlsensors 10 vorbeibewegt wird, die sich senkrecht zur Drehachse der abzubremsenden Getriebewelle 2 erstreckt. In diesem Fall würde dann eine axiale Erfassung der Drehzahl der abzubremsenden Getriebewelle 2 erfolgen.

Im Unterschied zum gezeigten Ausführungsbeispiel der Fig. 1 ist es erfindungsgemäß vorgesehen, dass das Geberrad 12 nicht der Getriebewelle 2 zugeordnet ist, sondern vielmehr dem Lamellenpaket 3, nämlich den ersten Lamellen 4 des Lamellenpakets 3, die der abzubremsenden Getriebewelle 2 zugeordnet sind.

Als Drehzahlsensor 10 wird vorzugsweise ein Sensor mit einer differentiellen Messmethode verwendet, so zum Beispiel ein Differenz-Hall-Sensor. Eine magnetische Vorspannung des Drehzahlsensors 10 kann durch das Erregerfeld der Spule 7 eingeprägt werden.

Der Magnetkörper 8 kann insbesondere in das Gehäuse 6 integriert sein oder mit diesem fest verbunden sein oder einstückig mit dem Gehäuse 6 ausgeführt sein, um das Getriebeschaltelement besonders kompakt auszuführen.

Obwohl die hier vorliegende Erfindung unter Bezugnahme auf Fig. 1 am Beispiel einer Getriebebremse beschrieben wurde, kann die Erfindung auch bei einer Getriebekupplung zum Einsatz kommen. Bei einer Getriebekupplung müssen Drehzahlen von zwei rotierenden Wellen aneinander angepasst werden, weshalb bei einer Getriebekupplung erste Lamellen eines Lamellenpakets einer ersten, rotierenden Welle und zweite Lamellen desselben einer zweiten, rotierenden Welle zugeordnet sind.

Da in diesem Fall die Drehzahlen von zwei Wellen erfasst werden müssen, sind dann auch zwei Drehzahlsensoren erforderlich, die wiederum im Sinne der Erfindung in den elektromagnetischen Aktuator, mit Hilfe dessen das Lamellenpaket verpresst werden kann, integriert sind. Die beiden Drehzahlsensoren wirken jeweils mit einem Geberrad zusammen, welches der jeweiligen Welle oder dem jeweiligen Lamellenpaket zugeordnet ist.

### Bezugszeichen

- 1: Getriebebremse
- 2: Getriebewelle
- 3: Lamellenpaket
- 4: erste Lamellen
- 5: zweite Lamellen
- 6: Gehäuse
- 7: Spule
- 8: Magnetkörper
- 9: Anker
- 10: Drehzahlsensor
- 11: Regeleinrichtung
- 12: Geberrad

## Patentansprüche

1. Elektromagnetisch betätigbares Getriebeschaltelement eines Kraftfahrzeugs, insbesondere elektromagnetisch betätigbare Getriebebremse (1), mit einem Lamellenpaket (3), mit einem elektromagnetischen Aktuator (7, 8, 9) zum einstellbaren mehr oder weniger starken Verpressen des Lamellenpakets (3), und mit mindestens einem Drehzahlsensor (10),
**dadurch gekennzeichnet, dass** der Drehzahlsensor (10) in den elektromagnetischen Aktuator integriert ist,
und dass ein mit dem Drehzahlsensor (10) zusammenwirkendes Geberrad (12) von Lamellen (4) des Lamellenpakets (3), die einer abzubremsenden Welle (2) zugeordnet sind, gebildet ist.

2. Getriebeschaltelement nach Anspruch 1, **dadurch gekennzeichnet, dass** der elektromagnetische Aktuator einen Magnetkörper (8), der mindestens eine Spule (7) aufnimmt, und einen Anker (9) umfasst, und dass der Drehzahlsensor (10) zusammen mit der Spule (7) in den Magnetkörper (8) integriert ist.

3. Getriebeschaltelement nach Anspruch 1 oder 2, **dadurch gekennzeichnet, dass** der Drehzahlsensor (10) die Drehzahl der abzubremsenden Welle (2) axial zu der abzubremsenden Welle (2) detektiert.

4. Getriebeschaltelement nach Anspruch 1 oder 2, **dadurch gekennzeichnet, dass** der Drehzahlsensor (10) die Drehzahl der abzubremsenden Welle (2) radial zu der abzubremsenden Welle (2) detektiert.

5. Getriebeschaltelement nach einem der Ansprüche 1 bis 4, **dadurch gekennzeichnet, dass** elektrische Anschlüsse für den Drehzahlsensor (10) und die Spule (7) zusammengefasst sind.

## Claims

1. Electromagnetically operable transmission shifting element of a motor vehicle, in particular electromagnetically operable transmission brake (1), having a laminate stack (3), having an electromagnetic actuator (7, 8, 9) for adjustably compressing the laminate stack (3) to a greater or lesser extent, and having at least one rotation speed sensor (10), **characterized in that** the rotation speed sensor (10) is integrated into the electromagnetic actuator, and **in that** a transmitter wheel (12), which interacts with the rotation speed sensor (10), is formed by laminates (4) of the laminate stack (3) which are associated with a shaft (2) which is to be braked.

2. Transmission shifting element according to Claim 1, **characterized in that** the electromagnetic actuator comprises a magnet body (8), which accommodates at least one coil (7), and an armature (9), and **in that** the rotation speed sensor (10) is integrated into the magnet body (8) together with the coil (7).

3. Transmission shifting element according to Claim 1 or 2, **characterized in that** the rotation speed sensor (10) detects the rotation speed of the shaft (2) which is to be braked axially in relation to the shaft (2) which is to be braked.

4. Transmission shifting element according to Claim 1 or 2, **characterized in that** the rotation speed sensor (10) detects the rotation speed of the shaft (2) which is to be braked radially in relation to the shaft (2) which is to be braked.

5. Transmission shifting element according to one of Claims 1 to 4, **characterized in that** electrical connections for the rotation speed sensor (10) and the coil (7) are combined.

## Revendications

1. Élément de commutation de transmission à commande électromagnétique pour un véhicule automobile, en particulier frein de transmission (1) à commande électromagnétique, comprenant un paquet de disques (3), un actionneur électromagnétique (7, 8, 9) pour presser de manière ajustable plus ou moins fortement le paquet de disques (3) et au moins un capteur de vitesse de rotation (10),
**caractérisé en ce que** le capteur de vitesse de rotation (10) est intégré dans l'actionneur électromagnétique,
et **en ce qu'**une roue de détection (12) coopérant avec le capteur de vitesse de rotation (10) est formée par des disques (4) du paquet de disques (3) qui sont associés à un arbre (2) devant être freiné.

2. Élément de commutation de transmission selon la revendication 1, **caractérisé en ce que** l'actionneur électromagnétique comprend un corps magnétique (8) qui reçoit au moins une bobine (7), et une armature (9) et **en ce que** le capteur de vitesse de rotation (10) est intégré conjointement avec la bobine (7) dans le corps magnétique (8).

3. Élément de commutation de transmission selon la revendication 1 ou 2, **caractérisé en ce que** le capteur de vitesse de rotation (10) détecte la vitesse de rotation de l'arbre (2) devant être freiné axialement par rapport à l'arbre (2) devant être freiné.

4. Élément de commutation de transmission selon la revendication 1 ou 2, **caractérisé en ce que** le capteur de vitesse de rotation (10) détecte la vitesse de rotation de l'arbre (2) devant être freiné radialement par rapport à l'arbre (2) devant être freiné.

5. Élément de commutation de transmission selon l'une quelconque des revendications 1 à 4, **caractérisé en ce que** des raccords électriques pour le capteur de vitesse de rotation (10) et pour la bobine (7) sont rassemblés.
